# EUROPÄISCHE PATENTSCHRIFT

(11) **EP 0 775 546 B1**
(45) Veröffentlichungstag und Bekanntmachung des Hinweises auf die Patenterteilung: **12.07.2000**
(21) Anmeldenummer: 96116867.1
(22) Anmeldetag: 21.10.1996
(51) Int. Cl.: B23B 31/28

(54) **Werkzeughaltevorrichtung**
Tool-holder
Dispositif porte-outil

(30) Priorität: 24.11.1995 DE 19543734
(43) Veröffentlichungstag der Anmeldung: 28.05.1997
(73) Patentinhaber: BENTELER AG, D-33104 Paderborn (DE)
(72) Erfinder: Jürgens, Ulrich, Dipl.-Ing., 32549 Bad Oeynhausen (DE); Korswird, Joachim, Dipl.-Ing., 49565 Bramsche (DE); Stratmann, Herbert, Dipl.-Ing., 33739 Bielefeld (DE); Werner, Uwe, Dipl.-Ing., 32120 Enger (DE)
(74) Vertreter: Loesenbeck, Karl-Otto, Dipl.-Ing.

(56) Entgegenhaltungen:
- GB-A- 1 111 390
- US-A- 3 970 407
- US-A- 4 632 614

## Beschreibung

Die vorliegende Erfindung betrifft eine Werkzeughaltevorrichtung für den automatischen Werkzeugwechsel bei einer Glasbearbeitungsmaschine für Schleif- und Bohrvorgänge entsprechend dem Gattungsbegriff des Anspruches 1.

Werkzeugwechselvorrichtungen, bei denen je nach Bearbeitungsgang ein automatischer Werkzeugwechsel zur Verkürzung der Takt- und Umrüstzeiten vorgenommen wird, sind aus dem Werkzeugmaschinenbau im Prinzip bekannt. Bei den für diese Werkzeugwechselvorrichtungen verwendeten Werkzeughalteeinrichtungen handelt es sich zumeist um solche, bei denen oberhalb des Werkzeuges im Werkzeughalter eine zentrische Spannung zur Festlegung des Werkzeuges vorgenommen wird. Die Betätigung einer solchen Spanneinrichtung erfolgt üblicherweise durch eine Schub- und Zugstange, die an einen Pneumatikzylinder angeschlossen ist und zentrisch durch die Spindel zur Werkzeughaltevorrichtung geführt ist, die am vorderen freien Ende der Arbeitsspindel aufgenommen ist.

Eine derartige gattungsgemäße Werkzeughaltevorrichtung ist aus US-A- 4 632 614 bekannt.

Als Bohrwerkzeuge für die Bearbeitung von Glasscheiben, insbesondere Flachglasscheiben, verwendet man im Gegensatz zu beispielsweise Bohrern für Metall- oder Holzbearbeitung sogenannte Diamanthohlbohrer, die rohrförmig ausgebildet sind und an ihrem unteren freien Schneidende mit Schneiddiamanten versehen sind. Durch den Hohlraum im Inneren des Bohrers wird während des Bohrvorganges Wasser oder Bohremulsion zur Kühlung bzw. Schmierung des Bohrers zugeführt.

Der Bohrvorgang in eine Flachglasscheibe erfolgt überwiegend mit paarweise angeordneten Bohrspindeln, die gegenüberliegend von beiden Seiten gleichzeitig die Glasscheibe anbohren.

Es werden also für jeden Bohrvorgang gleichzeitig zwei Werkzeuge benötigt, die selbstverständlich beim Übergang von einem Bohrdurchmesser auf einen anderen beide gewechselt werden müssen.

Bedingt durch die besondere Gestaltung der Bohrwerkzeuge als Hohlbauteile mit innenliegender Kühl- und Schmiermittelversorgung sind die oben erwähnten Werkzeugwechselvorrichtungen mit zentrischer Spannung mit Glasbearbeitungsmaschinen nicht anwendbar, vielmehr erfolgt der Werkzeugwechsel manuell und erfordert Rüstzeiten im Größenbereich von mehreren Minuten.

Um die entsprechenden Taktzeiten bei der Bearbeitung von Flachglasscheiben, in die mehrere unterschiedliche Bohrungen eingebracht werden müssen, zu verkürzen, wird dazu übergegangen, für unterschiedliche Bohrungsdurchmesser mehrere Bohrspindelpaare auf sogenannten Mehrspindelbohrmaschinen einzusetzen. Um bei der Bearbeitung einer Flachglasscheiben kürzeste Taktzeiten zu erreichen, ist folglich für jedes Bohrloch ein entsprechendes Bohrspindelpaar erforderlich. Dies ist mit erheblichen INvestitionen verbunden, da außerdem auf einer Bohrmaschine üblicherweise verschiedene Serien von Flachglasscheiben mit unterschiedlichen Bohrungsdurchmessern und Bohrbildern bearbeitet werden.

Aufgabe der vorliegenden Erfindung ist es daher, eine Werkzeughaltevorrichtung für den automatischen Werkzeugwechsel bei Glasbearbeitungsmaschinen, insbesondere Glasbohrmaschinen, zu gestalten, mit der sich unter Verwendung üblicher Glasbohrer und herkömmlicher Bearbeitungsmaschinen die Taktzeiten für den Werkzeugwechsel erheblich verkürzen lassen.

Diese Aufgabe wird erfindungsgemäß daduch gelöst, daß Werkzeughalter und Werkzeughalteraufnahmekopf je einen zu ihrer gemeinsamen Dreh- und Vorschubachse konzentrischen Magnetkreis aufweisen, wobei die Magnetkreise von Werkzeughalter und Werkzeughalteraufnahmekopf in zusammengesetztem Zustand der Werkzeughaltevorrichtung in Axialrichtung unmittelbar benachbart angeordnet sind und wobei die Magnetkreise eine entgegengesetzte Polung aufweisen, und daß die Magnetkreise aus Einzelmagneten bestehen, die in ihrer konzentrischen Anordnung im Abstand zur Dreh- und Vorschubachse auf gleichen Kreisradien im Abstand zueinander angeordnet sind, wobei der Abstand der Einzelmagnete mindestens einer Zahnteilung der Axialverzahnung entspricht.

Durch diese erfindungsgemäße Bauweise wird eine Werkzeughaltevorrichtung geschaffen, bei der die Drehmomentübertragung durch die vorhandene Axialverzahnung erfolgt, das Aufbringen der Haltekräfte um bei einer entsprechenden Drehmagnetübertragung die Axialverzahnung in Eingriff zu halten, wird durch die Anziehungskraft der beiden entgegengesetzt gepolten Magnetkreise bewirkt.

Darüber hinaus bewirkt die Ausgestaltung der Magnetkreise als auf einem Kreisring angeordnete Einzelmagnete eine automatisch richtige Positionierung der Zähne und Zahnlücken der Axialverzahnung übereinander, so daß ohne besondere Ausrichtmaßnahmen eine Koppelung von Werkzeughalter und Werkzeughalteraufnahmnekopf bei jedem Wechsel gewährleistet ist.

Weitere vorteilhafte Ausgestaltungen des Gegenstandes der Erfindung ergeben sich aus den Merkmalen der Unteransprüche.

Es hat sich insbesondere als vorteilhaft herausgestellt, die Außenkontur der Zähne und Zahnlücken der für die Drehmomentübertragung verantwortlichen Axialverzahnung kreissegmentartig auszubilden. Diese Maßnahme unterstützt zusätzlich zu der durch die Anordnung der Magnete bedingten richtigen Positionierung ein Ineinanderrasten der Axialverzahnung, da insbesondere die abgerundeten Köpfe der Zähne es erleichtern, daß, sollten sich wider Erwarten zwei Zähne anstatt einem Zahn und einer Zahnlücke gegenüberstehen, die Zähne an ihren jeweils gegenüberliegenden Zahnflanken herabgleiten und der Formschluß der Axialverzahnung hergestellt wird.

Eine weiter bevorzugte Ausgestaltung sieht vor, daß die Axialverzahnungen und die Magnetkreise von Werkzeughalter und Werkzeughalteraufnahmekopf auf unterschiedlichen Radien zur gemeinsamen Drehachse jeweils in einer gemeinsamen Axialebene angeordnet sind. Durch diese Maßnahme läßt sich die Bauhöhe bzw. Baulänge der gesamten Werkzeughaltevorrichtung gering halten. Es ist hierbei denkbar, die Axialverzahnung auf einem inneren Radius um die zentrale Drehachse anzuordnen und den Magnetkreis mit seinen einzelnen Magneten auf einem größeren Radius am Außenumfang der Axialverzahnung. Dies hat insbesondere den Vorteil, daß die für die Aufbringung der Haltekräfte durch die Magnete unter Umständen notwendige größere Wirkfläche sich in den außen liegenden Flächen leichter unterbringen läßt. Es ist jedoch ebenfalls denkbar, die Axialverzahnung auf einem äußeren Radius und die Magnetkreise auf einem inneren Radius von Werkzeughalter und Werkzeughalteraufnahmekopf anzuordnen.

Für den Transport und das Abnehmen des Werkzeughalters vom Werkzeughalteraufnahmekopf ist am Werkzeughalter eine ringförmig umlaufende Nut gebildet, die von einem unteren und oberen Flansch begrenzt wird. Derjenige Flansch, der im zusammengebauten Zustand der Werkzeughaltevorrichtung dem Werkzeughalteraufnahmekopf zugewandt ist, weist in einer weiteren bevorzugten Ausgestaltung des Gegenstandes der Erfindung an seiner der Nut abgewandten Seite die Axialverzahnung und den Magnetring auf. Diese spezielle Bauweise trägt ebenfalls dazu bei, die Baulänge der gesamten Werkzeughaltevorrichtung möglichst klein zu halten.

Im folgenden wird ein Ausführungsbeispiel des Gegenstandes der Erfindung anhand der beigefügten Zeichnungen näher erläutert.

Es zeigen:
- Figur 1: eine Werkzeughaltevorrichtung der erfindungsgemäßen Art als Seitenansicht mit einer Teilschnittdarstellung,
- Figur 2: den zur Werkzeughaltevorrichtung gehörigen Werkzeughalteraufnahmekopf in Seitenansicht mit Teilschnitt,
- Figur 3: die Ansicht A gemäß Pfeil aus Figur 2 des Werkzeughalteraufnahmekopfes,
- Figur 4: eine Ansicht der Werkzeughaltevorrichtung aus Figur 1 im auseinandergezogenen Zustand,
- Figur 5: zwei sich gegenüberliegende Bohrköpfe einer Glasbohrmaschine mit erfindungsgemäßen Werkzeughaltevorrichtungen im Betriebszustand,
- Figur 6: die Bohrköpfe aus Figur 5 bei abgenommenen Werkzeughaltern während des Werkzeugwechselvorganges.

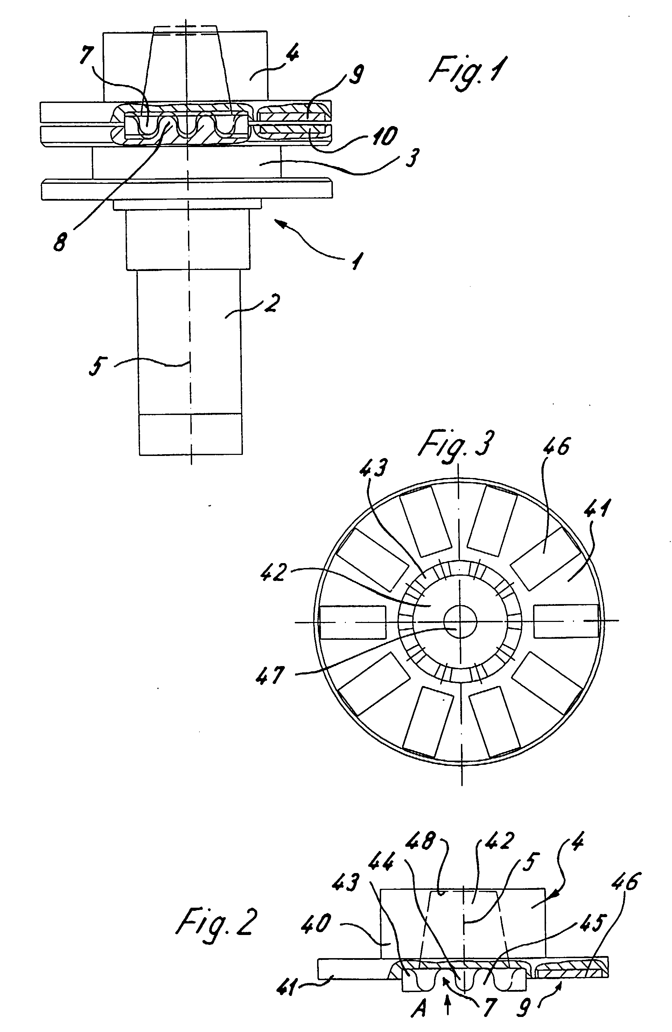

Die in ihrer Gesamtheit mit der Bezugsziffer 1 bezeichnete Werkzeughaltevorrichtung besteht aus einem Werkzeug 2, das in einen Werkzeughalter 3 eingesetzt ist, der wiederum in einem Werkzeughalteraufnahmekopf 4 aufgenommen ist. Werkzeughalteraufnahmekopf 4 und Werkzeughalter 3 weisen eine gemeinsame Dreh- und Vorschubachse 5 auf. Desweiteren ist in der Figur 1 zu sehen, daß Werkzeughalter 3 und Werkzeughalteraufnahmekopf 4 jeweils eine Axialverzahnung 7 und 8 sowie jeweils einen Magnetkreis 9 und 10 aufweisen, die in zusammengesetztem Zustand von Werkzeughalter 3 und Werkzeughalteraufnahme 4 ineinandergreifen bzw. sich in Axialrichtung der Drehachse unmittelbar gegenüberstehen.

Bei der Darstellung der Werkzeughaltevorrichtung in Figur 1 wurde zwischen dem Werkzeughalter 3 und dem Werkzeughalteraufnahmekopf 4 aus Anschauungsgründen ein ca. 1 mm breiter Spalt gelassen. Dieser Spalt ist bei einer Werkzeughaltevorrichtung im Betriebszustand durch die Anziehung der beiden Magnetringe nicht vorhanden.

Der Werkzeughalteraufnahmekopf besteht aus einem an der hier nicht näher dargestellten Bohrspindel festgelegten Gehäuseoberteil 40 mit zylinderförmigem Querschnitt und einem sich an eine Stirnseite des Gehäuses anschließenden Flansch 41. Entlang der Drehachse 5 ist im Inneren des Gehäuses eine Ausnehmung in Form eines Innenkonus 42 ausgebildet. Der Innenkonus verjüngt sich von seiner dem Flansch 41 zugewandten Öffnung zu seiner am entgegengesetzten Ende des Zylindergehäuses 40 angeordneten Bodenfläche 48. Die Bodenfläche 48 besitzt, wie aus Figur 3 ersichtlich, eine zentrisch angeordnete Bohrung 47, durch die aus der Spindel heraus Wasser oder Bohrflüssigkeit in den Werkzeughalteraufnahmekopf 4 eintreten kann.

An der dem Gehäuseteil 40 abgewandten Stirnfläche des Flansches 41 befindet sich eine Axialverzahnung 43. Diese Verzahnung besteht aus kreisringförmig angeordneten Zähnen 44 und entsprechenden Zahnlücken 45, deren Außenkontur aus Kreisringsegmenten aufgebaut ist. Dies bedeutet, daß der Zahnkopf eines jeden Zahnes 44 eine halbkreisförmige Außenkontur aufweist und an seinen jeweiligen Seitenflanken in eine ebensolche, allerdings inverse Kontur übergeht, aus der der Grund der benachbarten Zahnlücke 45 gebildet ist. Die Figur 3 macht deutlich, daß die Axialverzahnung 7 aus zehn Zähnen 44 und ebensovielen Zahnlücken 45 gebildet ist. Auf einem zur Drehachse 5 größerem Radius sind ringförmig einzelne Magnete 46 angeordnet, die zusammen den Magnetkreis 9 bilden. Die Einzelmagnete 46 besitzen eine rechteckförmige Gestalt und sind an der Unterseite des Flansches 41 so angeordnet, daß die Magnetlinien des Nordpols dieser Magnete 46 aus der Flanschebene nach unten heraustreten.

Jeder der rechteckförmigen Einzelmagnete 46 ist so ausgerichtet, daß er mit seiner zur Drehachse gerichteten Stirnseite gegenüber einer einzelnen Zahnlücke 45 der Axialverzahnung 7 angeordnet ist. Es befinden sich folglich in Analogie zur Zähnezahl der Axialverzahnung auf einem Kreisring rund um die Axialverzahnung 7 angeordnet zehn Einzelmagnete 46. Die Magnetkraft des Magnetringes 9 wird in diesem Ausführungsbeispiel durch Permanentmagnete bereitgestellt, es ist jedoch durchaus denkbar, entsprechend klein gestaltete Elektromagnete zur Bereitstellung der notwendigen Magnetkräfte entsprechend anzuordnen.

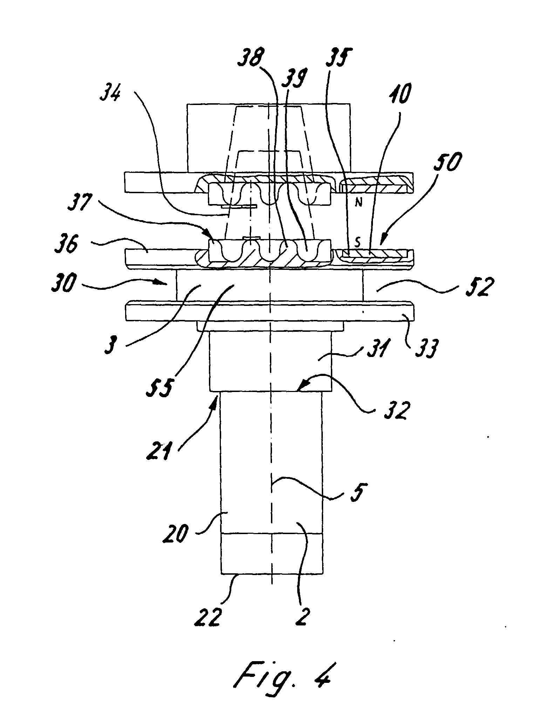

In der Figur 4 ist fluchtend mit der Drehachse 5 des Werkzeughalteraufnahmekopfes 4 der Werkzeughalter 3 dargestellt. In den Werkzeughalter 3 ist an seiner dem Werkzeughalteraufnahmekopf 4 abgewandten Seite das Werkzeug 2, in diesem Falle ein Glasschneidhohlbohrer, aufgenommen. Der Bohrer 2 besteht aus einem Stahlhohlzylinder 20, an dessen dem Werkzeughalter zugewandten Ende ein Außengewinde 21 geschnitten ist, wobei es sich um den sogenannten "Belgischen Anschluß R 1/2 Zoll" für die Befestigung von Diamanthohlbohrern handelt. Am freien Ende des Diamanthohlbohrers 2 befindet sich die Schneide 22, die mit Schneiddiamanten besetzt ist. Der Werkzeughalter 3 besteht im wesentlichen aus einem Gehäuseoberteil 30 und einem zur Aufnahme des Werkzeuges 2 vorgesehenen Gehäuseunterteil 31. Im Gehäuseunterteil 31 ist für die Aufnahme des Diamanthohlbohrergewindes ein Innengewinde eingeschnitten.

Sowohl das Gehäuseunterteil 31 als auch das Gehäuseoberteil 30 besitzen einen im wesentlichen runden Querschnitt mit mehreren Absätzen. Aus dem Gehäuseoberteil 30 steht in Richtung des Werkzeughalteraufnahmekopfes 4 ein Außenkonus 34 hervor, der maßlich mit dem Innenkonus 42 des Werkzeughalteraufnahmekopfes übereinstimmt. Das Gehäuseoberteil 30 weist an seiner dem Außenkonus 34 zugewandten Stirnseite einen Flansch 36 auf, in dem sich in Analogie zu dem bereits besprochenen Werkzeughalteraufnahmekopf eine Verzahnung 37, bestehend aus Zähnen 38 und Zahnlücken 39, sowie ein Magnetring 10, bestehend aus Einzelmagneten 50, befinden. Wie bereits in Figur 3 und im Rahmen der Beschreibung zum Werkzeughalteraufnahmekopf dargelegt, weisen die einzelnen Magnete 50 im wesentlichen eine rechteckförmige Gestalt auf. Im Gegensatz zur Anordnung der Magnete im Werkzeughalteraufnahmekopf, wo die zum Mittelpunkt bzw. zur Drehachse des Aufnahmekopfes gerichteten Stirnseiten der Magnete jeweils gegenüber einer Zahnlücke 45 liegen, sind die zum Mittelpunkt des Werkzeughalters gerichteten Stirnseiten der Magnete 50 so angeordnet, daß sie jeweils einem Zahn 44 der Verzahnung 37 gegenüberstehen.

Darüber hinaus besteht zwischen der Anordnung der Einzelmagnete 50 des Werkzeughalters und den Magneten 35 des Werkzeughalteraufnahmekopfes der Unterschied, daß die Einzelmagnete des Werkzeughalters entgegengesetzt zu denen des Aufnahmekopfes 4 gepolt sind. Das bedeutet in diesem Ausführungsbeispiel, daß der Südpol der Magnete 50 nach oben zur entgegengesetzten Seite des Werkzeuges weist. Da sich Magnete immer mit ihren entgegengesetzten Polen anziehen, ist durch diese Anordnung sichergestellt, daß eine genügend große Anziehungskraft zwischen dem Werkzeughalteraufnahmekopf und dem Werkzeughalter für den Fall, daß der Werkzeughalter in den Anziehungsbereich der Magnete des Aufnahmekopfes gelangt, bereitgestellt wird. Darüber hinaus ergibt die Teilung der Magnetkreise am Aufnahmekopf 4 und am Werkzeughalter 3, daß sich, bedingt durch die Anziehungskräfte und somit die übereinanderliegende Anordnung der Einzelmagnete, beim Zusammenziehen von Werkzeughalteraufnahmekopf 4 und Werkzeughalter 3 beide Teile so ausrichten, daß sich bezüglich der Axialverzahnung immer ein Zahn und eine Zahnlücke gegenüberstehen. Natürlich ist es auch denkbar, im Aufnahmekopf 4 die Stirnseiten der Einzelmagnete 46 jeweils einer Zahnlücke zuzuordnen und demgegenüber jedem Einzelmagneten 50 des Werkzeughalters 3 jeweils einen Zahn gegenüberzustellen. Für die Zentrierfunktion der Werkzeughaltevorrichtung ist entscheidend, daß der Abstand der Einzelmagnete mindestens einer Zahnteilung der Axialverzahnung entspricht und daß bei gegenüberliegenden Einzelmagneten von Aufnahmekopf 4 und Werkzeughalter 3 die korrespondierende Axialverzahnung beider Bauteile so verschoben ist, daß sich ein entsprechender Zahn und eine entsprechende Zahnlücke gegenüberstehen.

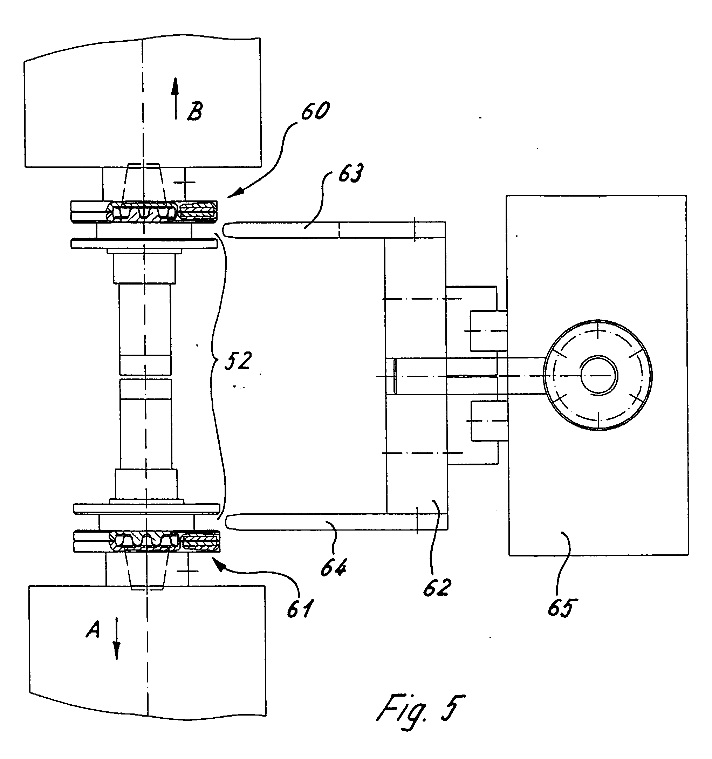

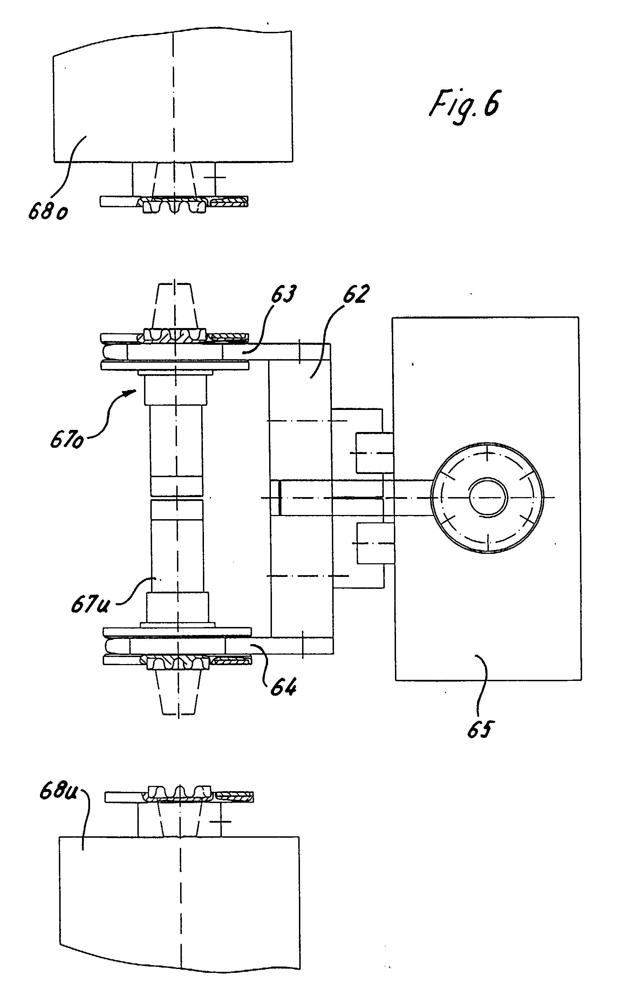

Wie aus Figur 4 zusätzlich ersichtlich ist, weist der Werkzeughalter 3 unterhalb seines Flansches 36 im Abstand hierzu einen weiteren Flansch 33 auf, durch die Anordnung beider Flansche wird eine ringförmig umlaufende Nut 52 geschaffen, die für den Eingriff der Gabel einer Haltezange 62 vorgesehen ist. Zur Verdeutlichung des Wechselvorganges für die Bohrwerkzeuge ist in Figur 5 ein Bohrspindelpaar mit zwei sich gegenüberliegenden Haltevorrichtungen 60 und 61 dargestellt. Sollen die Diamanthohlbohrer der beiden dargestellten Haltevorrichtungen gewechselt werden, so geschieht dies unter Zuhilfenahme einer Haltezange 62, an der sich eine obere Gabel 63 sowie eine untere Gabel 64 befinden. Diese Gabeln 63 und 64 besitzen jeweils an ihrem vorderen freien Ende eine U-förmige Ausnehmung, die in ihrem Schenkelabstandsmaß etwas größer ist als der Durchmesser des zylinderförmigen Abschnittes 55, der den Nutgrund der Nut 52 bildet. Angetrieben und gesteuert über eine Verfahreinheit 65 greifen die obere Gabel 63 und untere Gabel 64 in die dafür vorgesehenen Nuten 52 der oberen Haltevorrichtung 60 sowie der unteren Haltevorrichtung 61 gleichzeitig ein. Nachdem dieser Eingriffsvorgang abgeschlossen ist, werden die Bohrspindeln in Richtung der Pfeile A und B verfahren. Durch den Verfahrvorgang werden die Haltekräfte der sich gegenüberliegenden Magnetkreise von Werkzeughalteraufnahmekopf und Werkzeughalter überwunden, so daß beide Teile der Werkzeughaltevorrichtung getrennt werden. Figur 6 macht dieses Stadium des Werkzeugwechselvorganges deutlich. Die beiden Werkzeughalter 67 o und 67 u sind in den Gabeln 63 und 64 der Haltezange 62 aufgehängt, während sich die Werkzeughalteraufnahmeköpfe 68 o und 68 u in entsprechendem Abstand oberhalb und unterhalb der Haltezange 62 befinden. Gesteuert durch die Verfahreinheit 65 werden anschließend die Werkzeughalter 67 o und 67 u mit den Diamanthohlbohrern in einem Werkzeugmagazin abgelegt.

Die Wiederbestückung der Werkzeughalteraufnahmeköpfe 68 o bzw, 68 u erfolgt analog, jedoch in umgekehrter Reihenfolge. Über die Verfahreinheit 65 werden horizontal zwischen die beiden Bohrspindeleinheiten zwei Werkzeughalter 67 o bzw. 67 u, die gemeinsam in der Haltezange 62 aufgenommen sind, positioniert. Es erfolgt eine Absenkung der Bohrspindeln mit den Werkzeughalteraufnahmeköpfen, wobei die entsprechende genaue Ausrichtung über die an den Werkzeughalteraufnahmeköpfen und den Werkzeughaltern angeordneten Magnetkreise vorgenommen wird. Sobald die beiden Bohrspindeln sich soweit abgesenkt haben, daß die Magnetkräfte der Werkzeughaltevorrichtung eine Verrastung von Werkzeughalteraufnahmekopf und Werkzeughalter bewirkt haben, werden die beiden Gabeln 63 und 64 über die Verfahreinheit 65 aus den Nuten 52 der jeweiligen oberen und unteren Werkzeughaltevorrichtung entfernt. Während die Verfahreinheit 65 die Haltezange 62 noch in eine Ruheposition bringt, kann bereits der nächst Bohrvorgang mit den neu bestückten Werkzeughaltevorrichtungen 68 o bzw. 68 u vorgenommen werden.

## Patentansprüche

1. Werkzeughaltevorrichtung für den automatischen Werkzeugwechsel bei einer Glasbearbeitungsmaschine für Schleif- und Bohrvorgänge, die einen Werkzeughalter (3) zur Aufnahme eines Werkzeuges der mit einem Außenkonus und einer zentralen Konusbohrung versehen ist, und einen spindelseitig festgelegten Werkzeughalteraufnahmekopf (4) mit einem zum Außenkonus des Werkzeughalters korrespondierenden und diesen aufnehmenden Innenkonus mit einer im Konusboden angeordneten Durchgangsbohrung aufweist, wobei Werkzeughalter (3) und Werkzeughalteraufnahmekopf (4) je eine Axialverzahnung (7, 8) aufweisen, die in zusammengebautem Zustand der Werkzeughaltevorrichtung (1) formschlüssig ineinander greifen, **dadurch gekennzeichnet, daß** Werkzeughalter (3) und Werkzeughalteraufnahmekopf (4) je einen zu ihrer gemeinsamen Dreh- und Vorschubachse (5) konzentrischen Magnetkreis (9, 10) aufweisen, wobei die Magnetkreise (9, 10) von Werkzeughalter (3) und Werkzeughalteraufnahmekopf (4) in zusammengesetztem Zustand der Werkzeughaltevorrichtung (1) in Axialrichtung unmittelbar benachbart angeordnet sind und wobei die Magnetkreise (9, 10) eine entgegengesetzte Polung aufweisen, und daß die Magnetkreise (9, 10) aus Einzelmagneten (46, 50) bestehen, die in ihrer konzentrischen Anordnung im Abstand zur Dreh- und Vorschubachse (5) auf gleichen Kreisradien in Abstand zueinander angeordnet sind, wobei der Abstand der Einzelmagnete (46, 50) mindestens einer Zahnteilung der Axialverzahnung (7, 8) entspricht.

2. Werkzeughaltevorrichtung nach Anspruch 1, **dadurch gekennzeichnet, daß** die zur Drehachse (5) gerichtete Stirnfläche jedes Einzelmagnetes (50) des Werkzeughalters (3) einem Zahn (38) der Axialverzahnung (8), und daß die zur Drehachse gerichtete Stirnfläche jedes Einzelmagnetes (46) des Werkzeughalteaufnahmekopfes (4) einer Zahnlücke (45) seiner Axialverzahnung (7) gegenüber angeordnet ist.

3. Werkzeughaltevorrichtung nach Anspruch 2, **dadurch gekennzeichnet, daß** die Axialverzahnung (7, 8) kreissegmentartig geformte Konturen für die einzelnen Zähne (44, 38) und Zahnlücken (39, 45) aufweist.

4. Werkzeughaltevorrichtung nach Anspruch 1 - 3, **dadurch gekennzeichnet, daß** die Axialverzahnungen (7, 8) und die Magnetkreise (9, 10) von Werkzeughalter (3) und Werkzeughalteraufnahmekopf (4) auf unterschiedlichen Radien zur gemeinsamen Drehachse (5) jeweils in einer gemeinsamen Axialebene angeordnet sind.

5. Werkzeughaltevorrichtung nach Anspruch 4, **dadurch gekennzeichnet, daß** der Werkzeughalter (3) mindestens zwei in axialem Abstand voneinander angeordnete Flansche (33, 36) aufweist, wobei der im zusammengebauten Zustand der Werkzeughaltevorrichtung (1) der dem Werkzeughalteraufnahmekopf zugewandte Flansch (36) den Magnetkreis (10) und die Axialverzahnung (8) aufweist.

6. Werkzeugwechselvorrichtung mit mindestens einer Werkzeughaltevorrichtung nach einem der Ansprüche 1 - 5, **dadurch gekennzeichnet, daß** die Werkzeughaltevorrichtung (1) zur Trennung von Werkzeughalter (3) und Werkzeughalteraufnahmekopf (4) in einen Gabelarm (63) einschiebbar ist.

## Claims

1. A tool holding device for automatic tool changing in a glass processing machine for grinding and drilling operations, comprising a tool holder (3) to accommodate a tool and provided with an external cone and a central conical bore, and also comprising a tool holder receiving head (4) which is fixed on the side adjacent the spindle and which has an internal cone corresponding to the external cone of the tool holder and receiving the latter and with a through bore disposed at the bottom of the cone, the tool holder (3) and tool holder receiving head (4) each having an axial toothing (7, 8) which in the assembled state of the tool holding device (1) interengage positively,
characterised in that the tool holder (3) and tool holder receiving head (4) each have a magnetic circuit (9, 10) concentric to their common rotational and feed axis (5), the magnetic circuits (9, 10) of the tool holder (3) and tool holder receiving head (4) being disposed immediately adjacent one another in the axial direction in the assembled state of the tool holding device (1), and the magnetic circuits (9, 10) having opposite polarity, and in that the magnetic circuits (9, 10) consist of individual magnets (46, 50) which in their concentric arrangement are disposed at a distance from the rotational and feed axis (5) on the same circle radii at a distance from one another, the distance between the individual magnets (46, 50) corresponding to at least one tooth pitch of the axial toothing (7, 8).

2. A tool holding device according to claim 1,
characterised in that the end face of each individual magnet (50) of the tool holder (3) facing the rotational axis (5) is disposed opposite a tooth (38) of the axial toothing (8) and in that the end face for each individual magnet (46) of the tool holder receiving head (4) facing the rotational axis is disposed opposite a tooth gap (45) of its axial toothing (7).

3. A tool holding device according to claim 2, characterised in that the axial toothing (7, 8) comprises contours shaped in the form of segments of a circle for the individual teeth (44, 38) and tooth gaps (39, 45).

4. A tool holding device according to any of claims 1 to 3, characterised in that the axial toothings (7, 8) and the magnetic circuits (9, 10) of the tool holder (3) and the tool holder receiving head (4) are disposed on different radii relative to the common rotational axis (5) in a common axial plane in each case.

5. A tool holding device according to claim 4, characterised in that the tool holder (3) comprises at least two axially spaced flanges (33, 36), the flange (36) which faces the tool holder receiving head in the assembled state of the tool holding device (1) comprising the magnetic circuit (10) and the axial toothing (8).

6. A tool changing device with at least one tool holding device according to any one of claims 1 to 5, characterised in that the tool holding device (1) is adapted to be inserted into a fork arm (63) for the purposes of separation of the tool holder (3) and tool holder receiving head (4).

## Revendications

1. Dispositif porte-outil pour le remplacement automatique d'outils dans une machine d'usinage du verre pour opérations de ponçage et de perçage, comprenant un porte-outil (3) qui est destiné à recevoir un outil et est muni d'un cône extérieur et d'un alésage conique central, et une tête (4) de réception du porte-outil, consignée à demeure côté broche et dotée d'un cône intérieur complémentaire du cône extérieur du porte-outil, recevant ledit cône extérieur et présentant un trou traversant ménagé dans le fond conique, le porte-outil (3) et la tête (4) de réception du porte-outil comportant une denture axiale respective (7, 8) s'interpénétrant par concordance de formes à l'état assemblé du dispositif (1) porte-outil, caractérisé par le fait que le porte-outil (3) et la tête (4) de réception du porte-outil possèdent un circuit magnétique respectif (9, 10) concentrique à leur axe commun (5) de rotation et d'avance, les circuits magnétiques (9, 10) du porte-outil (3) et de la tête (4) de réception du porte-outil étant directement voisins, dans le sens axial, à l'état assemblé du dispositif (1) porte-outil, et lesdits circuits magnétiques (9, 10) présentant une polarité inversée ; et par le fait que les circuits magnétiques (9, 10) consistent en des aimants individuels (46, 50) agencés avec espacement mutuel sur des rayons de cercle identiques, dans leur disposition concentrique à distance de l'axe (5) de rotation et d'avance, l'espacement des aimants individuels (46, 50) correspondant au moins à un pas de la denture axiale (7, 8).

2. Dispositif porte-outil selon la revendication 1, caractérisé par le fait que la face extrême de chaque aimant individuel (50) du porte-outil (3), dirigée vers l'axe de rotation (5), est placée en vis-à-vis de la denture axiale (8) ; et par le fait que la face extrême de chaque aimant individuel (46) de la tête (4) de réception du porte-outil, qui est dirigée vers l'axe de rotation, est placée en vis-à-vis d'un entredent (45) de sa denture axiale (7).

3. Dispositif porte-outil selon la revendication 2, caractérisé par le fait que la denture axiale (7, 8) présente, pour les dents (44, 38) et les entredents (39, 45) individuels, des contours de configuration du type secteur circulaire.

4. Dispositif porte-outil selon les revendications 1-3, caractérisé par le fait que les dentures axiales (7, 8) et les circuits magnétiques (9, 10) du porte-outil (3), et de la tête (4) de réception du porte-outil, sont respectivement disposés dans un plan axial commun, sur des rayons différents par rapport à l'axe commun de rotation (5).

5. Dispositif porte-outil selon la revendication 4, caractérisé par le fait que le porte-outil (3) comporte au moins deux collerettes (33, 36) axialement distantes l'une de l'autre, la collerette (36), tournée vers la tête de réception du porte-outil, présentant le circuit magnétique (10) et la denture axiale (8) à l'état assemblé du dispositif (1) porte-outil.

6. Dispositif de remplacement d'outils équipé d'au moins un dispositif porte-outil selon l'une des revendications 1-5, caractérisé par le fait que ledit dispositif (1) porte-outil peut être inséré dans un bras fourchu (63), en vue de la séparation du porte-outil (3) et de la tête (4) de réception du porte-outil.
